# EUROPEAN PATENT SPECIFICATION

(11) **EP 3 638 445 B1**
(45) Date of publication and mention of the grant of the patent: **25.10.2023**
(21) Application number: 17913432.5
(22) Date of filing: 12.06.2017
(51) Int. Cl.: B23D 61/04, B23D 61/14, B28D 1/04, B28D 1/06, B23D 77/02, B27B 33/02

(54) **METHOD FOR PRODUCING A CUTTING TOOL AND CUTTING TOOL**
VERFAHREN ZUR HERSTELLUNG EINES SCHNEIDWERKZEUGS UND SCHNEIDEWERKZEUG
PROCÉDÉ DE FABRICATION D'UN L'OUTIL DE COUPE ET OUTIL DE COUPE

(43) Date of publication of application: 22.04.2020
(73) Proprietor: Husqvarna AB, 561 82 Huskvarna (SE)
(72) Inventor: GILLET, Thierry, 1070 Brussels (BE)
(86) International application number: PCT/SE2017/050624
(87) International publication number: WO 2018/231104

(56) References cited:
- EP-A2- 0 261 504
- EP-A2- 0 376 676
- GB-A- 542 054
- JP-A- H0 487 777
- JP-A- S6 248 419
- SE-C2- 530 344
- SE-C2- 530 344
- US-A- 2 994 350
- US-A- 4 641 628
- US-A- 4 727 778
- US-A1- 2005 279 533
- US-A1- 2007 169 598

## Description

### TECHNICAL FILED

This invention relates to a cutting tool for cutting hard materials, comprising a support body equipped with a plurality of cutting modules fixedly attached to one edge of the support body. It also relates to a method for producing a cutting tool.

### BACKGROUND

It is recognized that in order to carry out cutting, drilling or grinding work of hard materials of natural or synthetic stone such as concrete, mainly for civil engineering and construction, tools based on diamond or similar highly abrasive resistant material in cutting edges are used. The tools consist on the one hand of a support member, with high ductility, and with grains of highly abrasive resistant material or similar on the cutting edges at the periphery of the support body.

The highly abrasive material is frequently grains or dust of diamonds, natural or synthetic, but other highly abrasive materials such as tungsten carbide may be used instead or in combination, e.g. sintered to form a cutting member.

The highly abrasive material is to be located on an outer edge of a support body that may have a circular form, as in cutting discs, or a tube form, as in drill bits for cutting out a circular hole, or alternatively in a plate form, as in saw blades. The cutting devices may be made by powder metallurgy, by brazing under Vacuum or by electrolytic deposition incorporating these grains or powders of the highly abrasive resistant material. Hence, it is known that the cutting member may either be applied directly to the support body or in the form of a sintered cutting member directly attached to the support body.

The sintered cutting members are normally not easily compatible to be welded directly on the support body, but therefore need laser welding. It is well known that the laser welding method used to weld these cutting edges onto a support bodyrequires a sophisticated and costly installation which also requires a very good qualification of the operators. The tools used to apply the sintered cutting members of highly abrasive resistant material to the support bodyare known to be complex and expensive and must be adapted to the geometry of each tool (i.e. shape of each steel support member). It is also recognized that the installation thus constructed has the advantage of assembling large quantities of identical parts at reduced costs. The amortization of the invested capital is directly proportional to the quantities produced. However, this universally applied method is not at all appropriate in the case of regular assembly workshops which is not set up to produce large quantities of similar product, but instead varying products depending on the fluctuating market need.

Accordingly, the general existing need on the market does not fit into the existing structure.

For example the manufacturing operations for diamond coated cutting tools are very often complex and involve very different geometries in shape and dimensions of the final cutting tool, with the consequence that the total production time proves to be relatively long. Supply logistics, production planning and inventory management are complicated and costly. However, a company established worldwide thanks to its sales network must optimize this global flow to meet market demands which are often pressing in terms of price and lead time. There is therefore a need to drastically reduce this global logistics chain by considering short processes and decentralized steps with appropriate new techniques. The possibility of shortening without prejudice to the quality, performance and safety of the products should be considered.

Assembly techniques have evolved considerably thanks to the advent of robotic assembly lines in metal constructions. The fastening controlled by means of deformation, riveting, clamping has developed considerably and is applied when the mechanical stresses in use remain moderate. Automatic welding techniques with or without filler metal also developed decisively when the mechanical stresses were high. One might therefore think that it would be decisive to consider these technological advances to apply them to this problem.

All in all this results in a limited amount of work shops that may produce such cutting tools, which in turn leads to high costs, e.g. due to transportation of heavy cutting tools.

Assembly techniques have evolved considerably thanks to the advent of robotic assembly lines in metal constructions. The fastening controlled by means of deformation, riveting, clamping has developed considerably and is applied when the mechanical stresses in use remain moderate. Automatic welding techniques with or without filler metal also developed decisively when the mechanical stresses were high. One might therefore think that it would be decisive to consider these technological advances to apply them to this problem.

SE 530 344 C2 discloses an assembly technique for thin saw blades, intended in particular for woodworking saw blades.

US 2005/0279533 A1 discloses techniques for securing diamond segments to rotating tools, such as core saws and the like.

US 4,727,778 describes a method for manufacturing a cutting tool, such as a diamond saw blade.

US 2,589,357 shows abrasive elements for use with rotary stone cutting saws.

GB 542,054 describes a tool comprising a plurality of teeth insertable into matched cut-out sections of a saw disc.

US 4,641,628 discloses a tool with cutting members, where each cutting member is made out of a base member and a cap member. All in all, this results in a limited amount of work shops that may produce such cutting tools, which in turn leads to high costs, e.g., due to transportation of heavy cutting tools.

### SUMMARY OF THE INVENTION

It is an object of the invention to minimize, or indeed eliminate, at least one of the problems mentioned above by providing a new method for producing a cutting tool as defined in claim 1 and also to provide a cutting tool as defined in claim 6.

Thanks to the invention many advantages are gained, e.g. that the current logistics chain may be drastically reduced and costs saved, thanks to enabling factory-manufactured modules of highly abrasive resistant material to be assembled on the tool/support bodies where the demand for use is made, i.e. close to the location for final usage. Further, by merely shipping relatively small modules of highly abrasive resistant material, cutting modules, (small space demand and lightweight), and assembling locally, large and heavy support bodies need not be transported, such that excessive CO2 footprint may be eliminated.

For an obvious economic reason, laser beam welding cannot be decentralized due to high investment costs for laser welding equipment. High investment of laser welding equipment, requirements on certified operators and maintenance costs all demonstrate that this technique is not conceivable for decentralized production due to low production volume assemblies. The situation is diametrically opposed regarding advanced standard welding techniques, with low investment and more accessible to standard operators. Accordingly the invention is synergistic in regard of today's structure.

The description is using following terminology,
- Support body: The base body of the cutting tool most often representing 50-90% of the total weight of the cutting tool, and preferably made in a ductile steel quality that is easily machined and welded in most regular local work shops.
- Cutting member: A cutting member comprising sintered grains or powder of highly wear resistant abrasive material, preferably with a hardness matching that of natural or synthetic diamonds, which need to be applied on a support member by means of using expensive laser beam technology.
- Support member: A support member having the cutting member, with the abrasive material, welded onto it and arranged with support surfaces for accurate attachment to the support body.

By this design with an intermediate support member with guiding surfaces, may the module with abrasive material be welded to the support bodyusing regular welding technique. Especially if the intermediate support member is made in a steel quality compatible with the steel support member. Hence, said compatibility enabling standard welding technique such as MIG, MAG, MicroMig, Cold MetalT, TIG or Plasma Tig when welding the cutting module onto the support body.

Moreover, the inventive cutting tool preferably is hindered to move in at least two different directions prior to welding, in order to more easily achieve good accuracy. In the most simple form of this preferred embodimet movement is prevented in a first direction, for example vertically downwards by the main body of the supporting member, and in a second direction, for example radially inwardly by at least on leg protruding from the main body of the cutting module, e.g. for produced a cutting disc, enabling mounting of the cutting module to the support body with accuracy prior to welding, without any need to perform measurements.

In a more preferred embodiment of the support member may be arranged with two legs and/or at lest one leg with protrusions to achieve form locking, hindering movement in a at least 3, preferably 4 orthogonal directions. Further, in order to obtain possibly improved form locking between the cutting module and the support body, a variety of protrusions and recesses may be applied

In a further embodiment the cutting tool may be provided with a void located in a part between the two abutting guide surfaces. The void may reduce the total area of the abutting surfaces that needs to be machined down to small tolerances on the support bodyas well as on the modules. However, the void may be filled with a filling metal.

Said filling by means of welding torch, brazing torch or possibly soldering.

According to a further preferred aspect, the cutting tool is arranged with a gap between neighbouring cutting modules. The gap facilitates efficient cooling during mounting of the modules and provides for transport of cooling liquid and/or removed material during operation.

Further advantageous aspects of the invention will become evident from the following description. The cutting tool according to invention may be made in several different shapes, and the support body may be shaped alternatively, e.g. as;
a. a disc with the abrasive resistant edges on the outer radial periphery of the disc, forming a circular saw blade for hard materials, or
b. a circular tube with the abrasive resistant edges on the axially directed end edges of the tube forming a hole drill for hard materials, or
c. an elongated blade with the abrasive resistant edges on one edge of the elongated blade, forming an elongated saw blade.

In summary, the present invention enable production of a cutting, drilling or grinding tool in two distinct stages, the abrasive resistant modules, often diamond parts, being produced in large series in specific production centers having the capacity to use laser beam welding, and these modules being sent and assembled in local manufacturing work shops as close as possible to the places where they are used, where no laser beam welding capacity is at hand nor needed.

### BRIEF DESCRIPTION OF FIGURES

In the following the invention will be described in more detail with reference to exemplary embodiments, wherein;
- Figure 1;: shows a side view of a section of a cutting disc, according to the invention, having cutting modules mounted on the outer radial periphery of the disc,
- Figure 2,: shows a side view of a first embodiment of a cutting module, according to the invention,
- Figure 3,: schematically shows different available general welding techniques for welding the cutting modules on a support body, according to the invention,
- Figure 4,: shows a side view of a second embodiment of a cutting module mounted on the edge of a support body, according to the invention,
- Figure 5,: shows a side view of a third embodiment of a cutting module mounted on the edge of a support body, according to the invention,
- Figure 6,: shows a plurality of alternate exemplary designs of a cutting module, according to the invention,
- Figure 7,: shows a side view of a fourth embodiment of a cutting module mounted on the edge of the steel support member, according to the invention,
- Figure 8,: shows a perspective view of a preferred embodiment of the cutting module, according to the invention, and
- Figure 9,: shows a side view of a cutting module of figure 8.

### DETAILED DESCRIPTION

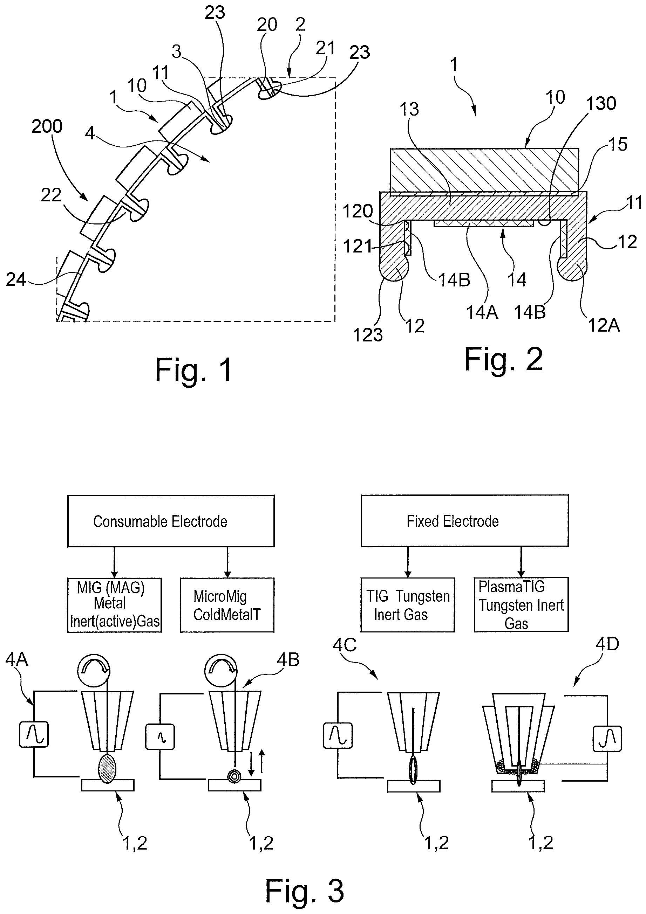

In figure 2, a first embodiment of a cutting module 1 is shown having a cutting member 10 of sintered diamond grains/powder applied to a support member 11 by means of a weld 15, i.e. a support member 11 that in the final product is positioned intermediate the cutting member 10 and the support body 2. The weld 15 applied, is in the form of a laser weld. Alternatively, but not according to the invention, the cutting member 10 and the support member 11 are integrated during sintering of the diamond part, i.e. by means of powder metallurgy. Accordingly, the process of applying the abrasive surface, i.e. the cutting member 10 is requiring costly and specialized equipment.

In the embodiment shown in figure 2 the support member 11 is schematically shown with welding material 14 applied to it, i.e. welds 14 that are for attachment of the cutting module 1 to a support body 2, preferably made of steel. One of the welds 14A extends along an underside 130 of a base plate 13 of the support member 11. As is evident for the skilled person that single weld 14A may in most applications provide sufficient strength, implying that a parallel epipetric base plate 13 (not shown) is sufficient in many applications, according to the invention.

However, according a preferred design the support member 11 has a base plate 13, with at least one leg 12, to provide improved strength and accuracy, by providing more than one support surface interacting with complementary support surfaces in the support body, as disclosed in the embodiments shown in the figures.

In fig. 2 the support member 11 is shown to include a base plate 13 with two legs 12 at each end of the base plate, the legs 12 protruding in a direction away from the cutting member 10. The legs 12 are arranged with enlarged areas 12A at the lower end of each leg 12, presenting opposing curved protrusions.

The design of the support member 11 preferably thereby enables form locking of it on the support body 2. Accordingly, such a cutting module 1 may provide a mounting on a support body providing exact form fit, i.e. presenting module supporting surfaces 120, 121, 123, 130 in four different orthogonal directions. The two opposing side surfaces 120 of the legs 12 hindering movement both clockwise as well as counter clockwise, the upper surface 121 of the enlarged areas 12A hindering movement outwards and the surface 123 at the end of each leg 12 hindering movement inwards. As is evident for the skilled person the invention also provides the basic function, by the use of support surface abutting in merely one direction (as described above), or support surface abutting in two orthogonal directions (only one leg without projection on the leg) or support surface abutting in three orthogonal directions (only one leg at one end and with one projection on one side of the leg).

In figure 1 there is shown a part of a cutting disc, i.e. the cutting tool, with the cutting modules 1 mounted at the periphery of support body 2, i.e. in this case the disc. The support body 2 is arranged wit a plurality of sets 200 of complementary (to the shape of the support member 11) support surfaces 20, 21, 23, 24. Each cutting modules 1 is pushed (in the direction of viewing in figure 1) over the corresponding shape of the support body 2, thus straddling over the radially directed protrusions 22 of the support body, thereby proving for the complementary support surfaces 20, 21, 23, 24; 120, 121, 123, 130 to come into abutting contact with each other. Once pushed into place, one or more welds 14 are applied by standard technics consisting in a MIG. MAG. MicroMig, Cold MctalT, TIG or Plasma Tig welding technique, to fixedly attach each cutting modules 1. Accordingly there is no need of making any measurements or use of complex fixtures when welding. As shown in fig 2 welds may be applied in the form of sections (or spots), e.g. including both horizontal parts 14A and vertical parts 14B, but preferably one continuous weld 14 is applied along the abutting surface.

As evident from figure 1 the support surfaces are oriented in the radial direction as well as the circumferential directions of the cutting tool, in this case a cutting disc, i.e. by using the two legs on the support member 11 movement is prevented in both circumferential directions, i.e. both clockwise as well as counter clockwise, and in both radial directions, i.e. both radially outwardly as well as radially inwardly.

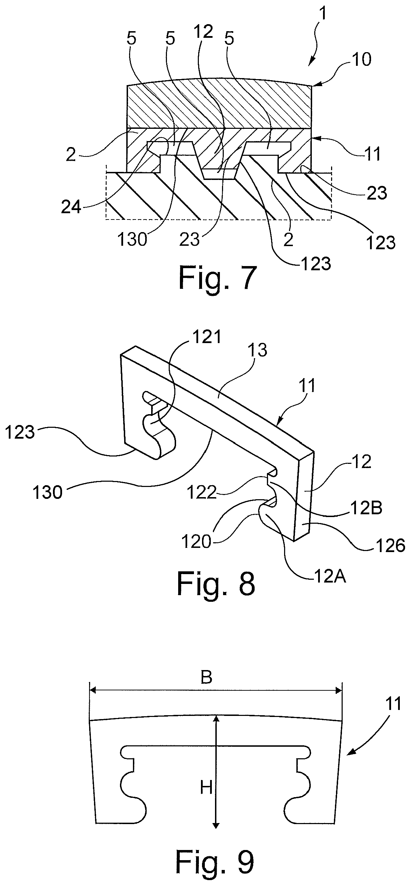

According to a further preferred aspect shown in fig 2, the cutting tool is arranged with a gap 3 between neighbouring cutting modules 1, i.e. the outer sides 126 of the cutting modules 1 (see fig. 8). The gap 3 facilitates efficient cooling during welding of the cutting modules 1 and provides for transport of cooling liquid and/or removed material during operation.

As seen in the embodiment shown in figure 1 the base plate 13 with the two legs 12 form a U-shaped female type of interfit, and each set 200 on support body 2 form a complementary U-shaped male type of interfit.

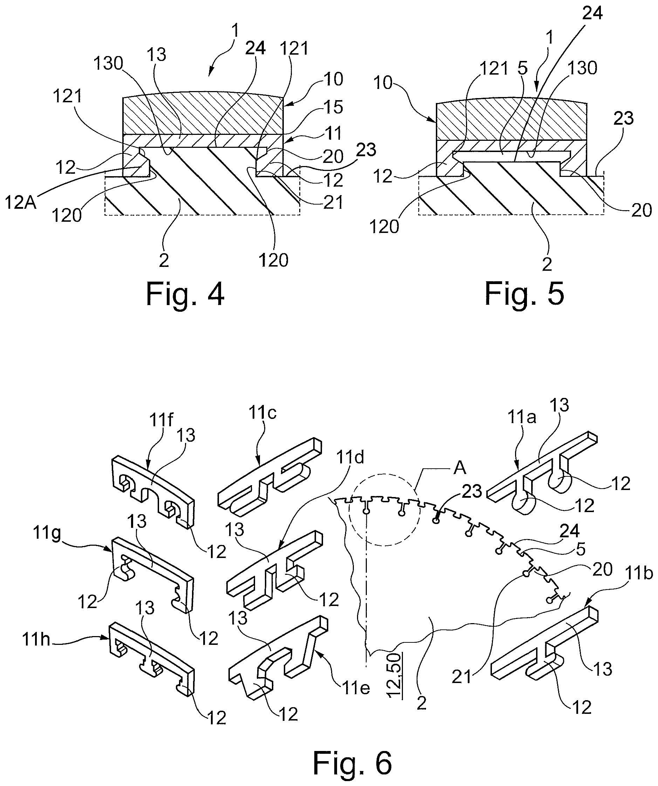

In figure 3 are shown examples of standard welding techniques that may be used for welding the cutting module 1 to the support body 2. The welding technique and / or the type of welding material, braze welding are chosen from those which best meet the needs locally, e.g. best price in combination with providing sufficient mechanical properties. The regular welding techniques covered by the invention are numerous, ranging from conventional welding processes without filler material, e.g. MIG/MAG or MicroMag or Cold MetalT, as shown in figure 4A or 4B or with filler material, e.g. TIG or PlasmaTIG, as shown in figure 4C or 4D.

The intermediate support member 13 may have various shapes in accordance with the invention. Examples of form locking non-exhaustive embodiments are shown in FIG. 6, wherein;
- 11 a show an alternative with two legs 12 with circular end members on the legs;
- 11b show an alternative with a single T-shaped leg;
- 11c, 11d and 11e show alternatives with two L-shape legs;
- 11f show an alternative with 4 L-shaped legs;
- 11g, show an alternative with 2 L-shaped legs with additional protrusions; (also shown in fig. 8 & 9) and 11h the same but with an additional third leg centrally.
- 11e, shows an alternative with two L-shaped legs, wherein many of the support surfaces are arranged at a sharp angle in relation to the radial direction of the tool.

In figure 4 there is shown an alternative embodiment where the intermediate support member 11 is prevented from moving in both radial directions, i.e. inwardly and outwardly, as well as in both circumferential directions, i.e. clockwise and counter clockwise, in a similar manner as described in relation to fig. 2. However, the design is different in that no curved supporting surfaces are used but instead plane supporting surfaces 120, 121, 123, 124, 130, and thereby also using one angled surface 121. (cf. e.g. 11d in figure 6, with also that support surface is plane.)

In figure 5 is shown an alternative embodiment where the intermediate support member 11 may be moved in one radial direction, i.e. inwardly until abutting one of the circumferentially extending support surfaces 24 of the support body. Some surfaces do not abut in this embodiment but leaves a cavity 5 intended to be filled with filling material, e.g. a weld 14. The two inwardly radially directed abutting support surfaces 123 are arranged at ends of each leg 12. This embodiment provides more flexibility regarding pre-mounting of the cutting module 1 and further provides that only a relatively small area of the support body 2 needs to be machined to tolerances. The cavity 5 between the support member 11 and the support body 2 may also be left as is if the structural rigidity of the tool is sufficient.

In figure 7 is shown a further embodiment, basically similar to that of figure 7, but with an additional leg 12 positioned centrally between the outer legs 12. Also here the support member 11 is prevented from moving in one radial directions, i. e. only inwardly, as well as in both circumferential directions, i.e. clockwise and counter clockwise, before welding the cutting module 1 to the support body2. The additional central leg 12 provides further plane support surfaces 123 that are angled and therefore may assist in abutting in three orthogonal directions. Also here only a small area of the support body 2 needs to be machined to tolerances, due to arranging three cavities 5.

In figures 8 and 9 are shown a preferred support member 11, as also shown in alternative 11g in figure 6. It includes 2 L-shaped legs 12, with dual inwardly directed protrusions 12A and 12B on each leg., facing each other. The stress exposure on the module in the radial direction due to centrifugal forces are considerable and therefore dual form locking protrusions 12A and 12B may be needed in some applications. The height H is preferably in the range 12-20 mm, more preferred about 14-16 mm, and with a length B preferably in the range 35-50 mm, more preferred about 38- 42 mm, with a thickness similar to that of the support body 2, which may lie in the range 4-6 mm, preferably about 4.5 mm.

### Example 1

A low alloyed chromium and molybdenum steel disc hardened and tempered to a Rockwell hardness C between 35 and 40 HRC and having a thickness of 3.5 mm and an outside diameter of 580 mm is laser cut at its periphery in the form shown In FIG. 7, according to a cutting pattern opposite to the shape of the support member 11. In this way, the parts can be nested or embedded with an accuracy that depends on the tolerances of their cutting. At least the support surfaces close to the radial protrusions on the circular support body are preferably cut by laser beam with a tolerance of the order of one tenth of a millimetre, while the remaining outer periphery may be machined with less tolerances. The support members 11 can be obtained by cutting Laser with the same type of tolerance or by stamping or by machining with a milling cutter. The quality of the steel of the support members is substantially similar to that used for the steel support body.

The weld 14 between the cutting module 1 and the support body 2 may be made by the supply of a solder of an alloy with 92% Copper and 8% Aluminium with a diameter of 1 mm giving a good fluidity of the brazing liquid bath, a good bonding of the steel parts and a good filling of the cavities 5 left by the pattern of the support members 11 relative to the cut-outs 200 of the plate of the disc 2 as indicated. In the present example, the width of the cavities 5 is in this case fixed between 1 and 2.5 mm. The support body 2 has a thickness of 3.5 mm. In the present case, a welding torch under argon gas was used with a current ranging from 100 to 110 A and an arc voltage of 17 V and the deposition rate reached an average of 55 cm / min. The mechanical result of the deposit was measured on a specimen with an elastic limit greater than 600 MPa and an elongation at break of the order of 40%. The present assembling case was obtained by attachment by means of three welds located in the three cavities 5 as shown in FIG. 7. The disc thus assembled was tested on a 60 KW ground sawing machine on a concrete slab heavily armed and showed similar results to a conventionally assembled disc.

### Example 2

The same similarly cut steel body 2 was lined with diamond segments 10 attached to their support member 11 by laser beam weld 15. In this case, the support member 11 has been cut in such a way that its embedment does not have a substantial cavity 5 between it and the body 2 of the tool, as in FIG. 4. The two parts were bonded by autogenous welding using a pulsed Tungsten-Inert-Gas (TIG) argon gas torch with an additional Argon-Carbon dioxide plasma gas in the nozzle. 5%, without filler metal, presenting a weld 14 without filler. The cord made in one pass on each side of the disc was made with a current between 95 and 130 A and a displacement of 60 cm / minute. The penetration of each bead is at least half the thickness of the disc so that, in total, the entire thickness has been welded. These two non-limiting examples show without doubt that a cutting tool based on use of cutting modules 1, including diamond segments 10, can be efficiently and reliably mounted using an innovative logistic by including decentralized workshop close to demand, enabling use of flexible and inexpensive techniques to attach the diamond parts 10 onto a suitable support body. The support member preferably has a shape such that it advantageously allows the positioning and the embedding of the cutting modules 1 on the support body 1 of the tool so as to guarantee an optimum precision of the assembly obtained.

The generic calculation of the cost and the gain thus achieved is given hereafter by way of example for a disc for cutting concrete floors with a diameter of 600 mm, containing 46 segments 40 mm long. The investment of a laser welding facility costs around 400,000 USD for an average capacity of 80 pieces per day. The conventional welding facility costs some 30,000 USD for an average capacity of 30 pieces per day. Thanks to the invention investments in laser welding facilities may be optimized to a limited number that provides using full capacity, i.e. enabling substantial savings. Further it enables substantial savings thanks to eliminated need of transporting heavy cutting tools, but instead small, light-weight cutting modules 1. Moreover, it provides the advantage that the same cutting module 1 may be used on a large variety of support bodies 2, thanks to being sufficiently small to fit for a variety of differently dimensioned support bodies.

According to an embodiment, a cutting tool is provided comprising a support body 2 equipped with a plurality of cutting modules 1 fixedly attached to one edge of the support body 2. Each cutting module 1 comprises a support member 11 having a sintered cutting member 10 fixedly attached thereto. The support member 11 has at least one module support surface 120, 121, 123 and the support body 2 has a plurality of attachment sets, each attachment set having at least one complementary, counter facing body support surface 20, 21, 23. Moreover, the cutting module 1 is joined with said support body 1 by means of weld 14 applied by standard technics.

According to an embodiment, the cutting member 10 contains grains or powder with a hardness of said grains or powder at least corresponding to the hardness of diamond grains or diamond powder, wherein preferably said grains or powder is in the form of diamond grains or diamond powder.

According to an embodiment, the support member 11 is made in steel and also the support member 2 and the steel quality of said support member 11 is compatible for welding with standard technics with the steel quality of the support member 2.

According to an embodiment, the cutting support member 11 is welded by means of a laser weld 15 is made in steel and also the support member 2 and wherein the steel quality of said support member 11 is compatible for welding with standard technics with the steel quality of the support member 2.

The invention is not limited by the examples and embodiments mentioned above, but may be varied within the scope of the appended claims. For instance, the skilled person realises that the support member 2 must not be arranged with any leg to achieve the main advantages of the invention, but that abutting surfaces in the form of one each on the support body and the support member also fulfils the basic function of the invention.

## Claims

1. A method for producing an abrasive cutting tool for cutting hard materials such as concrete and stone, comprising a support body (2) equipped with a plurality of sintered cutting members (10) fixedly attached to one edge of the support body (2) by means of at least one weld (14, 15), comprising the steps of;
a) providing a plurality of sintered cutting members (10),
b) providing a respective plurality of support members (11) with at least one module supporting surfaces (120, 121, 123, 130) on an attachment side,
c) fixedly joining each cutting member (10) with a respective support member (11) to form a cutting module (1), wherein the sintered cutting members (10) are joined with the support members (11) by means of respective laser welds (15), said cutting module being produced at a first location,
d) at a second location which is decentralized, providing the support body (2) with a plurality of attachment sets having at least one complementary, counter facing body support surface (20, 21, 23),
e) pre-mounting each cutting module (1) onto the support body (2) by complementary inter-fitting said at least one module support surface (120, 121, 123) with one of said sets having at least one complementary body support surface (20, 21, 23), and
f) applying at least one weld (14) to fixedly attach each one of said cutting modules (1) to said support body (2), wherein the welds (14) between the cutting modules (1) and the support body (2) is applied by a MIG, MAG, MicroMig, Cold MetalT, TIG or Plasma Tig welding technique.

2. A method according to any of claim 1, wherein each support member (11) is provided with a plurality of module support surfaces (120, 121, 123) facing in at least 2 different directions and each attachment set is provided a plurality of body support surface (20, 21, 23), also facing in at least 2 different directions, such that at least a part of the complementary support surfaces (120, 121, 123; 20, 21, 23) in each of the 2 different directions will come into abutting contact with each other preventing movement in at least 2 orthogonal directions,

3. A method according to claim 2, wherein said support surfaces (120, 121, 123; 20, 21, 23) are arranged such that each cutting module (1) is prevented from moving in 3 orthogonal directions before applying said weld (14).

4. A method according to claim 3, wherein each cutting module (1), before applying the weld (14) is mounted onto the support body (2) by sliding it axially to achieve abutting contact of the complementary support surfaces (120, 121, 123; 20, 21, 23).

5. A method according to any of the preceding claims, wherein steps a)-c) are performed in a centralized manner at a first location and steps d)-f) are performed in a distributed manner at a plurality of second locations.

6. A cutting tool produced by a method according to any of claims 1-5, comprising a support body (2) equipped with a plurality of cutting modules (1) fixedly attached to one edge of the support body (2), wherein each cutting module (1) comprises a respective support member (11) having a sintered cutting member (10) fixedly attached thereto, said support member (11) having at least one module support surface (120, 121, 123) and said support body (2) having a plurality of attachment sets, each attachment set having at least one complementary, counter facing body support surface (20, 21, 23), wherein said cutting module (1) is joined with said support body (1) by means of a weld (14), wherein said support member (11) is arranged with a main body (13) extending substantially along said cutting member (10) and that said main body (13) at an opposite side in relation to said cutting member (10) is arranged with at least one leg (12) protruding in a direction away from said cutting member (10) and wherein at least one of said module support surfaces (120, 121, 123) is arranged on said leg (12), such that at least a part of the complementary support surfaces (120, 121, 123; 20, 21, 23) hinder movement, also prior to welding, in at least 2 orthogonal directions,
wherein the sintered cutting members (10) are joined with the support members (11) by means of respective laser welds (15), and in that the welds (14) between the cutting modules (1) and the support body (2) is applied by a MIG, MAG, MicroMig, Cold MetalT, TIG or Plasma Tig welding technique.

7. A cutting tool according to claim 6, wherein said at least one leg (12) is arranged with a plurality of module support surfaces (120, 121, 123) to hinder movement, also prior to welding, in 3 orthogonal directions, and preferably, a cavity (5) between edges of the support member (11) and support body (2) is filled with a filling material (14), preferably a weld.

8. A cutting tool according to claim 6 or 7, wherein said support member (11) is arranged with at least two legs (12).

9. A cutting tool according to any of claims 6-8, wherein said at least one leg (12) or an intermediate space between two legs (12) is formed to provide form fit hindering movement in at least 2 orthogonal direction, and preferably orthogonal direction.

10. A cutting tool according to any of claims 6 -9, wherein a gap (3) is arranged between each neighbouring cutting module (1), wherein preferably said gap (3) is, at least partly, defined by outer facing edges (126) of two neighbouring cutting modules (1).

11. A cutting tool according to any of claims 6-10, wherein said support member (2) is in any of form defined below;
a. a disc with the abrasive resistant edges on the outer radial periphery of the disc, forming a circular saw blade for hard materials, or
b. a circular tube with the abrasive resistant edges on the axially directed end edges of the tube forming a hole drill for hard materials, or
c. an elongated blade with the abrasive resistant edges on one edge of the elongated blade, forming an elongated saw blade.

## Patentansprüche

1. Verfahren zur Herstellung eines abrasiven Schneidwerkzeugs zum Schneiden von harten Materialien, wie z.B. Beton und Stein, umfassend einen Trägerkörper (2), der mit einer Vielzahl von gesinterten Schneidelementen (10) ausgestattet ist, die mithilfe wenigstens einer Schweißnaht (14, 15) fest an einem Rand des Trägerkörpers (2) befestigt sind, umfassend die Schritte:
a) Bereitstellen einer Vielzahl von gesinterten Schneidelementen (10),
b) Bereitstellen einer entsprechenden Vielzahl von Trägerelementen (11) mit wenigstens einer Modul-Trägeroberfläche (120, 121, 123, 130) an der Befestigungsseite,
c) festes Verbinden jedes Schneidelements (10) mit einen entsprechenden Trägerelement (11), um ein Schneidmodul (1) zu bilden, wobei die gesinterten Schneidelemente (10) mithilfe entsprechender Laserschweißnähte (15) mit den Trägerelementen (11) verbunden werden, wobei das Schneidmodul an einem ersten Standort hergestellt wird,
d) an einem zweiten Standort, der dezentralisiert ist, Versehen des Trägerkörpers (2) mit einer Vielzahl von Befestigungsgruppen, die wenigstens eine komplementäre, entgegenzeigende Körper-Trägeroberfläche (20, 21, 23) aufweisen,
e) Vormontieren jedes Schneidmoduls (1) auf den Trägerkörper (2) durch komplementäres Zusammenfügen der wenigstens einen Modul-Trägeroberfläche (120, 121, 123) mit einer der Gruppen mit der wenigstens einen komplementären Körper-Trägeroberfläche (20, 21, 23) und
f) Anbringen wenigstens einer Schweißnaht (14) zum festen Befestigen jedes der Schneidmodule (1) an den Trägerkörper (2), wobei die Schweißnähte (14) zwischen den Schneidmodulen (1) und dem Trägerkörper (2) durch ein MIG-, MAG-, MicroMig-, Cold-MetalT-, TIG- oder Plasma-Tig-Schweißverfahren angebracht werden.

2. Verfahren gemäß einem von Anspruch 1, wobei jedes Trägerelement (11) mit einer Vielzahl von Modul-Trägeroberflächen (120, 121, 123) versehen ist, die in wenigstens 2 verschiedene Richtungen zeigen, und jede Befestigungsgruppe mit einer Vielzahl von Körper-Trägeroberflächen (20, 21, 23) versehen ist, die ebenfalls in wenigstens 2 verschiedene Richtungen zeigen, so dass wenigstens ein Teil der komplementären Trägeroberflächen (120, 121, 123; 20, 21, 23) in jeder der 2 verschiedenen Richtungen in anliegenden Kontakt miteinander kommen wird, um Bewegung in wenigstens 2 orthogonalen Richtungen zu verhindern.

3. Verfahren gemäß Anspruch 2, wobei die Trägeroberflächen (120, 121, 123; 20, 21, 23) so angeordnet sind, dass jedes Schneidmodul (1) vor dem Anbringen der Schweißnaht (14) an Bewegung in 3 orthogonalen Richtungen gehindert wird.

4. Verfahren gemäß Anspruch 3, wobei jedes Schneidmodul (1) vor dem Anbringen der Schweißnaht (14) an dem Trägerkörper (2) angebracht wird, indem es axial verschoben wird, um anliegenden Kontakt der komplementären Trägeroberflächen (120, 121, 123; 20, 21, 23) zu erzielen.

5. Verfahren gemäß einem der vorstehenden Ansprüche, wobei die Schritte a) bis c) auf zentralisierte Weise an einem ersten Standort durchgeführt werden und die Schritte d) bis f) auf dezentralisierte Weise an einer Vielzahl von zweiten Standorten durchgeführt werden.

6. Schneidwerkzeug, hergestellt durch ein Verfahren gemäß einem der Ansprüche 1-5, umfassend einen Trägerkörper (2), der mit einer Vielzahl von Schneidmodulen (1) ausgestattet ist, die fest an einem Rand des Trägerkörpers (2) befestigt sind, wobei jedes Schneidmodul (1) ein entsprechendes Trägerelement (11) umfasst, das ein gesintertes Schneidelement (10) fest daran befestigt aufweist, wobei das Trägerelement (11) wenigstens eine Modul-Trägeroberfläche (120, 121, 123) aufweist und der Trägerkörper (2) eine Vielzahl von Befestigungsgruppen aufweist, wobei jede Befestigungsgruppe wenigstens eine komplementäre, entgegenzeigende Körper-Trägeroberfläche (20, 21, 23) aufweist, wobei das Schneidmodul (1) mithilfe einer Schweißnaht (14) mit dem Trägerkörper (2) verbunden ist, wobei das Trägerelement (11) mit einem Hauptkörper (13) gestaltet ist, der im Wesentlichen entlang des Schneidelements (10) verläuft, und der Hauptkörper (13) an einer gegenüberliegenden Seite bezogen auf das Schneidelement (10) mit wenigstens einem Schenkel (12) gestaltet ist, der in eine Richtung weg von dem Schneidelement (10) vorragt, und wobei wenigstens eine der Modul-Trägeroberflächen (120, 121, 123) an dem Schenkel (12) angeordnet ist, so dass wenigstens ein Teil der komplementären Trägeroberflächen (120, 121, 123; 20, 21, 23) auch vor dem Schweißen Bewegung in wenigstens 2 orthogonalen Richtungen verhindert,
wobei die gesinterten Schneidelemente (10) mithilfe entsprechender Laserschweißnähte (15) mit den Trägerelementen (11) verbunden sind und die Schweißnähte (14) zwischen den Schneidmodulen (1) und dem Trägerkörper (2) durch ein MIG-, MAG-, MicroMig-, Cold-MetalT-, TIG- oder Plasma-Tig-Schweißverfahren angebracht sind.

7. Schneidwerkzeug gemäß Anspruch 6, wobei der wenigstens eine Schenkel (12) mit einer Vielzahl von Modul-Trägeroberflächen (120, 121, 123) versehen ist, um auch vor dem Schweißen Bewegung in 3 orthogonalen Richtungen zu verhindern, und vorzugsweise ein Hohlraum (5) zwischen Rändern des Trägerelements (11) und dem Trägerkörper (2) mit einem Füllmaterial (14), vorzugsweise einer Schweißnaht, gefüllt ist.

8. Schneidwerkzeug gemäß Anspruch 6 oder 7, wobei das Trägerelement (11) mit wenigstens zwei Schenkeln (12) gestaltet ist.

9. Schneidwerkzeug gemäß einem der Ansprüche 6-8, wobei der wenigstens eine Schenkel (12) oder ein Zwischenraum zwischen zwei Schenkeln (12) dafür beschaffen ist, Passhinderung von Bewegung in wenigstens 2 orthogonalen Richtungen und vorzugsweise orthogonaler Richtung bereitzustellen.

10. Schneidwerkzeug gemäß einem der Ansprüche 6-9, wobei eine Lücke (3) zwischen jedem benachbarten Schneidmodul (1) angeordnet ist, wobei die Lücke (3) vorzugsweise wenigstens zum Teil durch einander zugewandten Kanten (126) von zwei benachbarten Schneidmodulen (1) definiert ist.

11. Schneidwerkzeug gemäß einem der Ansprüche 6-10, wobei das Trägerelement (2) in einer der nachstehend definierten Formen vorliegt:
a. eine Scheibe mit den abrasionsfesten Kanten an dem radialen Außenrand der Scheibe, um ein kreisförmiges Sägeblatt für harte Materialien zu bilden, oder
b. ein kreisförmiges Rohr mit den abrasionsfesten Kanten an den axial gerichteten Kanten des Rohrs angeordnet, um einen Lochbohrer für harte Materialien zu bilden, oder
c. eine langgestreckte Klinge mit den abrasionsfesten Kanten an einer Kante der langgestreckten Klinge, um ein langgestrecktes Sägeblatt zu bilden.

## Revendications

1. Procédé de production d'un outil de coupe abrasif destiné à couper des matériaux durs tels que du béton et de la pierre, comprenant un corps de support (2) équipé d'une pluralité d'éléments de coupe frittés (10) attachés de façon fixe à un bord du corps de support (2) au moyen d'au moins une soudure (14, 15), comprenant les étapes suivantes :
a) obtention d'une pluralité d'éléments de coupe frittés (10),
b) obtention d'une pluralité respective d'éléments de support (11) avec au moins une surface de support de module (120, 121, 123, 130) sur un côté d'attache,
c) assemblage fixe de chaque élément de coupe (10) avec un élément de support respectif (11) pour former un module de coupe (1), les éléments de coupe frittés (10) étant assemblés avec les éléments de support (11) au moyen de soudures laser respectives (15), ledit module de coupe étant produit à un premier emplacement,
d) à un deuxième emplacement qui est décentralisé, équipement du corps de support (2) avec une pluralité d'ensembles d'attache ayant au moins une surface de support de corps complémentaire, en face à face (20, 21, 23),
e) prémontage de chaque module de coupe (1) sur le corps de support (2) par imbrication complémentaire de ladite au moins une surface de support de module (120, 121, 123) avec un desdits ensembles ayant au moins une surface de support de corps complémentaire (20, 21, 23), et
f) application d'au moins une soudure (14) pour attacher de façon fixe chacun desdits modules de coupe (1) audit corps de support (2), dans lequel les soudures (14) entre les modules de coupe (1) et le corps de support (2) sont appliquées par une technique de soudage MIG, MAG, MicroMig, par transfert de métal à froid, TIG ou TIG à plasma.

2. Procédé selon la revendication 1, dans lequel chaque élément de support (11) est équipé d'une pluralité de surfaces de support de module (120, 121, 123) tournées dans au moins 2 directions différentes et chaque ensemble d'attache est équipé d'une pluralité de surfaces de support de corps (20, 21, 23), également tournées dans au moins 2 directions différentes, de telle sorte qu'au moins une partie des surfaces de support complémentaires (120, 121, 123 ; 20, 21, 23) dans chacune des 2 directions différentes viendra en contact de butée avec chaque autre, empêchant un déplacement dans au moins 2 directions orthogonales.

3. Procédé selon la revendication 2, dans lequel lesdites surfaces de support (120, 121, 123 ; 20, 21, 23) sont agencées de telle sorte que chaque module de coupe (1) est empêché de se déplacer dans 3 directions orthogonales avant l'application de ladite soudure (14).

4. Procédé selon la revendication 3, dans lequel chaque module de coupe (1), avant l'application de la soudure (14), est monté sur le corps de support (2) par glissement axial du premier pour réaliser un contact de butée des surfaces de support complémentaires (120, 121, 123 ; 20, 21, 23).

5. Procédé selon l'une quelconque des revendications précédentes, dans lequel les étapes a)-c) sont effectuées d'une manière centralisée à un premier emplacement et les étapes d)-f) sont effectuées d'une manière répartie à une pluralité de deuxièmes emplacements.

6. Outil de coupe produit par un procédé selon l'une quelconque des revendications 1 à 5, comprenant un corps de support (2) équipé d'une pluralité de modules de coupe (1) attachés de façon fixe à un bord du corps de support (2), dans lequel chaque module de coupe (1) comprend un élément de support respectif (11) ayant un élément de coupe fritté (10) attaché de façon fixe à celui-ci, ledit élément de support (11) ayant au moins une surface de support de module (120, 121, 123) et ledit corps de support (2) ayant une pluralité d'ensembles d'attache, chaque ensemble d'attache ayant au moins une surface de support de corps complémentaire, en face à face (20, 21, 23), dans lequel ledit module de coupe (1) est assemblé avec ledit corps de support (1) au moyen d'une soudure (14), dans lequel ledit élément de support (11) est agencé avec un corps principal (13) s'étendant sensiblement le long dudit élément de coupe (10) et ledit corps principal (13) sur un côté opposé par rapport audit élément de coupe (10) est agencé avec au moins une patte (12) faisant saillie dans une direction s'éloignant dudit élément de coupe (10) et dans lequel au moins une desdites surfaces de support de module (120, 121, 123) est disposée sur ladite patte (12), de telle sorte qu'au moins une partie des surfaces de support complémentaires (120, 121, 123 ; 20, 21, 23) empêche un déplacement, également avant soudage, dans au moins 2 directions orthogonales,
dans lequel les éléments de coupe frittés (10) sont assemblés avec les éléments de support (11) au moyen de soudures laser respectives (15), et en ce que les soudures (14) entre les modules de coupe (1) et le corps de support (2) sont appliquées par une technique de soudage MIG, MAG, MicroMig, par transfert de métal à froid, TIG ou TIG à plasma.

7. Outil de coupe selon la revendication 6, dans lequel ladite au moins une patte (12) est agencée avec une pluralité de surfaces de support de module (120, 121, 123) pour empêcher un déplacement, également avant soudage, dans 3 directions orthogonales, et de préférence, une cavité (5) entre des bords de l'élément de support (11) et du corps de support (2) est remplie avec un matériau de remplissage (14), de préférence une soudure.

8. Outil de coupe selon la revendication 6 ou 7, dans lequel ledit élément de support (11) est agencé avec au moins deux pattes (12).

9. Outil de coupe selon l'une quelconque des revendications 6 à 8, dans lequel ladite au moins une patte (12) ou un espace intermédiaire entre deux pattes (12) est formé pour assurer un ajustement de forme empêchant un déplacement dans au moins 2 directions orthogonales, et de préférence une direction orthogonale.

10. Outil de coupe selon l'une quelconque des revendications 6 à 9, dans lequel un espace (3) est ménagé entre chaque module de coupe (1) voisin, de préférence dans lequel ledit espace (3) est au moins partiellement défini par des bords tournés vers l'extérieur (126) de deux modules de coupe (1) voisins.

11. Outil de coupe selon l'une quelconque des revendications 6 à 10, dans lequel ledit élément de support (2) se présente sous n'importe quelle forme définie ci-dessous :
a. un disque avec les bords abrasifs résistants sur la périphérie radiale externe du disque, formant une lame de scie circulaire pour matériaux durs, ou
b. un tube circulaire avec les bords abrasifs résistants sur les bords d'extrémité dirigés axialement du tube formant un foret pour matériaux durs, ou
c. une lame allongée avec les bords abrasifs résistants sur un bord de la allongée lame formant une lame de scie allongée.
